# DEMANDE DE BREVET EUROPEEN

(11) **EP 4 604 248 A1**
(43) Date de publication de la demande: **20.08.2025**
(21) Numéro de dépôt: 24305246.1
(22) Date de dépôt: 13.02.2024
(51) Int. Cl.: H01M 10/0562, H01M 50/103, H01M 50/15, H01M 50/159, H01M 50/166, H01M 50/553

(54) **COUVERCLE DE BOITIER DE CELLULE, BOITIER ASSOCIE, CELLULE DE BATTERIE COMPRENANT UN TEL BOITIER ET ASSEMBLAGE DE TELLES CELLULE**

(71) Demandeur: Automotive Cells Company SE, 33520 Bruges (FR)
(72) Inventeur: BAYLAC, Johan, 33800 Bordeaux (FR); CHAUVEAU, Pierre, 33520 Bruges (FR); MATHIEU, Alexandre, 33300 Bordeaux (FR)
(74) Mandataire: Alatis

(57) **Abrégé**

L'invention concerne un couvercle (21) pour une cellule (10) de batterie du type comprenant un godet (20) fermé par au moins un couvercle (21), le couvercle (21) étant caractérisé en ce qu'il comprend : une paroi d'extrémité (211) ; et au moins deux parois latérales (213A, 213B) s'étendant parallèlement entre elles et parallèlement à un axe de référence (X1) du couvercle (21) depuis la paroi d'extrémité (211) jusqu'à un rebord de raccordement (212) présentant un contour fermé et délimitant une ouverture (212') destinée à être raccordée au godet (20) de la cellule (10), le couvercle (21) étant caractérisé en ce que la paroi d'extrémité (211) et les parois latérales (213A, 213B) délimitent ensemble un espace intérieur (321), une première (213A) des deux parois latérales (213A, 213B) du couvercle (21) comprenant un orifice principal (111) traversant configuré pour accueillir un terminal (11) de cellule (10).

## Description

### DOMAINE TECHNIQUE DE L'INVENTION

L'invention concerne, de façon générale, le domaine technique des cellules de batteries de véhicules hybrides ou électriques.

L'invention se rapporte plus spécifiquement à un couvercle de cellule, à la cellule munie du couvercle, et à l'assemblage de plusieurs cellules.

### ÉTAT DE LA TECHNIQUE ANTÉRIEURE

Les véhicules automobiles à traction, à propulsion ou à quatre roues motrices électrique ou hybride, comportent un ou plusieurs modules de batterie reliés à un réseau de puissance pour alimenter un moteur électrique (de traction, de propulsion ou de quatres roues motrices).

Les modules de batterie sont regroupés dans un carter et forment alors un bloc batterie aussi souvent désigné par l'expression anglaise « battery pack », ce carter contenant généralement une interface de montage et des bornes de raccordement.

Chaque module de batterie comprend au moins une cellule électrochimique, généralement plusieurs cellules électrochimiques, générant du courant par réaction chimique, par exemple de type lithium-ion (ou Li-ion), de type Ni-Mh, ou Ni-Cd ou plomb.

Une cellule électrochimique peut être de forme parallélépipédique rectangle, on parle alors de cellule « prismatique », de forme cylindrique ou en forme de poche, désignée par l'expression anglaise « pouch ».

Les cellules prismatiques comportent un godet (aussi appelé « can » en termes anglosaxons), rigide, souvent métallique, comprenant quatre parois latérales et deux parois d'extrémité, dont une paroi dite « d'appui ». À l'intérieur du godet sont logés une pluralité d'empilements d'électrodes positives reliées les unes aux autres à un premier terminal, et une pluralité d'empilements d'électrodes négatives reliées les unes aux autres à un deuxième terminal.

De façon plus précise, un premier collecteur de courant relie la pluralité d'empilements d'électrodes positives au premier terminal et un deuxième collecteur de courant relie la pluralité d'empilements d'électrodes négatives au deuxième terminal. Les premier et deuxième collecteurs de courant se présentent sous la forme de feuilles métalliques pliées et soudées aux terminaux. Les terminaux sont eux-mêmes fixés/soudés sur la paroi d'extrémité opposée à la paroi d'appui de la cellule.

Il est connu d'assembler, en série et/ou en parallèle, une pluralité de cellules électrochimiques afin de réaliser des modules ou des batteries électriques, à l'aide d'un dispositif d'interconnexion assurant un contact électrique entre les terminaux de deux cellules électrochimiques voisines. Le dispositif d'interconnexion peut par exemple être un ensemble de languettes métalliques soudées sur plusieurs terminaux de cellules pour les relier électriquement.

Afin d'assembler mécaniquement les cellules électrochimiques reliées électriquement, il est connu de les aligner sur un support plan ou un rail, la paroi d'appui étant en contact plan avec le support ou le rail, et de les maintenir aux deux extrémités compressées par des plaques parallèles fixes, un tel assemblage étant désigné sous le terme « module ».

Cependant, le positionnement des terminaux sur une paroi d'extrémité de la cellule oblige l'utilisation d'éléments d'interconnexion pour relier les cellules entre elles. L'ajout de ces éléments d'interconnexion prolonge le temps de production d'un module, et, lorsque ces éléments sont soudés aux terminaux, ils ne permettent pas le démontage d'un module de batterie.

De plus, il est nécessaire de prévoir un volume supplémentaire à l'intérieur du godet des cellules, ce volume étant situé entre les empilements d'électrodes et la paroi d'extrémité opposée à la paroi d'appui du godet et servant à l'intégration des collecteurs de courant. L'encombrement spatial des cellules et des modules est important, sans pour autant augmenter leur volume utile. Leur intégration dans des véhicules hybrides et électriques s'en trouve limitée.

Enfin, le pliage des collecteurs de courant, qui sont des feuilles métalliques, exerce une contrainte permanente sur ces collecteurs qui peuvent, au cours des utilisations et des chocs prolongés, s'abîmer voire se déchirer et compromettre le fonctionnement des cellules et des modules de batterie.

### EXPOSE DE L'INVENTION

L'invention vise à remédier à tout ou partie des inconvénients de l'état de la technique en proposant notamment une solution permettant d'obtenir une cellule de batterie dans laquelle les collecteurs de courant ne sont pas déformés.

L'invention concerne également un assemblage simplifié de cellules et un ensemble de cellules résultant de cet assemblage.

Pour ce faire est proposé, selon un premier aspect de l'invention, un couvercle pour une cellule de batterie du type comprenant un godet fermé par au moins un couvercle, le couvercle étant caractérisé en ce qu'il comprend :
- une paroi d'extrémité ; et
- au moins deux parois latérales s'étendant parallèlement entre elles et parallèlement à un axe de référence du couvercle depuis la paroi d'extrémité jusqu'à un rebord de raccordement présentant un contour fermé et délimitant une ouverture destinée à être raccordée au godet de la cellule,
la paroi d'extrémité et les parois latérales délimitant ensemble un espace intérieur, une première des deux parois latérales du couvercle comprenant un orifice principal traversant configuré pour accueillir un terminal de cellule.

L'invention fournit un couvercle de cellule de batterie complexe possédant un espace intérieur exploitable pur y insérer de la connectique de cellule de batterie, permettant ainsi d'utiliser tout le volume utile de la cellule. De préférence, le premier orifice principal présente un contour rectangulaire.

Selon un mode de réalisation, une deuxième des deux parois latérales du couvercle comprend un orifice secondaire traversant complémentaire de l'orifice principal, l'orifice secondaire étant de préférence disposé transversalement en regard de l'orifice principal du couvercle.

L'orifice secondaire du couvercle permet d'offrir une fenêtre d'accès à l'intérieur du couvercle pour procéder à des opérations de fabrication, notamment pour l'intégration du terminal de cellule dans le premier orifice principal du couvercle.

Selon un mode de réalisation, le couvercle comporte une paroi d'extrémité et quatre parois latérales s'étendant parallèlement entre elles deux à deux et parallèlement à l'axe de référence, les première et deuxième parois latérales du couvercle étant formées par des grandes parois latérales du couvercle, c'est-à-dire des parois présentant chacune une aire supérieure à une aire de chacune des deux autres parois latérales du couvercle.

Selon un mode de réalisation, la paroi d'extrémité est pourvue d'au moins un évent d'aération fermé par une paroi amincie configurée pour former un point de faiblesse du couvercle en cas d'effet de gonflement contenu à l'intérieur de la cellule lorsqu'il est en position fermé de la cellule.

Le positionnement de l'évent d'aération sur la paroi d'extrémité du couvercle lui permet de couvrir une surface plus importante que celle couverte par des évents d'aération de cellules de batteries connues dans l'état de l'art, et donc d'optimiser l'évacuation de la chaleur contenue à l'intérieur de la cellule de batterie.

Selon un autre aspect de l'invention, celle-ci a trait à une cellule de batterie remarquable en ce qu'elle comprend un godet fermé par au moins un premier couvercle tel que décrit ci-avant, le godet de la cellule comprenant au moins deux parois latérales s'étendant parallèlement entre elles et parallèlement à un axe de référence du godet.

La cellule de batterie obtenue présente l'avantage de posséder un emplacement prédéfini pour un terminal de cellule.

Selon un mode de réalisation, le godet fermé par au moins le premier couvercle délimite un espace intérieur à l'intérieur duquel est logé au moins un empilement d'électrodes positives et négatives, les électrodes positives étant reliées les unes aux autres à un premier terminal de cellule et les électrodes négatives étant reliées les unes aux autres à un deuxième terminal de cellule, les parois latérales du godet présentant à une première portion d'extrémité un premier rebord de raccordement présentant un contour fermé et délimitant une ouverture du godet, le rebord de raccordement du premier couvercle coopérant avec le premier rebord de raccordement du godet pour fermer l'ouverture du godet de sorte que dans la position fermée du couvercle, au moins le premier terminal est maintenu fixement à travers l'orifice principal du premier couvercle par une interface de fixation.

De préférence, le rebord de raccordement du godet est soudé au rebord de raccordement du couvercle sont soudés.

Selon un mode de réalisation, la cellule comprend un deuxième couvercle comprenant :
- une deuxième paroi d'extrémité ;
- au moins deux parois latérales s'étendant parallèlement à un axe de référence du deuxième couvercle ; et
- un rebord de raccordement ;
définis ci-avant, un orifice principal et un orifice secondaire étant formés respectivement sur une première et une deuxième des deux parois latérales du deuxième couvercle, les parois latérales du godet présentant à une deuxième portion d'extrémité opposée axialement à la première portion d'extrémité un deuxième rebord de raccordement présentant un contour fermé et délimitant une deuxième ouverture du godet, le rebord de raccordement du deuxième couvercle coopérant avec le deuxième rebord de raccordement du godet pour fermer la deuxième ouverture du godet de sorte que dans la position fermée du deuxième couvercle au moins le deuxième terminal est maintenu fixement à travers l'orifice principal du deuxième couvercle par une interface de fixation.

De préférence, le premier terminal est soudé à au moins une portion de la première interface de fixation, et le deuxième terminal est soudé à au moins une portion de la deuxième interface de fixation.

Le godet et les premier et deuxième couvercles forment une cellule compacte comprenant un premier et un deuxième terminaux situés sur des grandes faces du premier et du deuxième couvercle. L'assemblage du godet et des premier et deuxième couvercles est simple à réaliser, et peut être intégré dans une unité de production à la chaîne.

Selon un mode de réalisation, lorsque les couvercles ferment la cellule :
- une portion de la première paroi latérale du premier couvercle entourant l'orifice principal du premier couvercle est coplanaire à la première portion d'extrémité de la première paroi latérale du godet ; et
- une portion de la première paroi latérale du deuxième couvercle entourant l'orifice principal du deuxième couvercle est coplanaire à la deuxième portion d'extrémité de la deuxième paroi latérale du godet.

Selon un mode de réalisation,
- une portion de la deuxième paroi latérale du premier couvercle entourant l'orifice secondaire du premier couvercle est coplanaire à la première portion d'extrémité de la deuxième paroi latérale du godet ; et
- une portion de la première paroi latérale du deuxième couvercle entourant l'orifice secondaire du deuxième couvercle est coplanaire à la deuxième portion d'extrémité de la première paroi latérale du godet.

Selon un mode de réalisation préférentiel, l'axe de référence du premier couvercle, l'axe de référence du deuxième couvercle et l'axe de référence du godet sont confondus et constituent un axe de référence de la cellule. La cellule obtenue présente une forme substantiellement parallélépipède rectangle.

Selon un mode de réalisation préférentiel,
- le premier terminal comprend une surface de contact électrique configurée pour venir au contact d'un autre terminal d'une cellule distincte adjacente, la surface de contact étant parallèle à l'axe de référence du premier couvercle ; et
- le deuxième terminal comprend une surface de contact électrique pour venir au contact d'un autre terminal d'une cellule distincte adjacente, la surface de contact étant parallèle à l'axe de référence du deuxième couvercle.

L'agencement des surfaces de contact électriques sur les premier et deuxième terminaux de cellules permet la connexion électrique entre les cellules de batterie par simple contact entre les terminaux de cellules, sans nécessiter l'ajout d'éléments additionnels d'interconnexion entre les cellules, comme cela est connu dans l'état de l'art. L'encombrement spatial de la cellule s'en trouve réduit.

Selon un mode de réalisation, le premier terminal ferme de manière étanche l'orifice principal du premier couvercle et le deuxième terminal ferme de manière étanche l'orifice principal du deuxième couvercle.

Selon un mode de réalisation, le godet et le ou les couvercles sont au moins en partie en matériau(x) métallique(s).

Selon un mode de réalisation,
- le rebord de raccordement du premier couvercle est soudé au premier rebord de raccordement du godet de la cellule ; et
- le rebord de raccordement du deuxième couvercle est soudé au deuxième rebord de raccordement du godet de la cellule.

De préférence, la soudure est réalisée par un soudage laser.

Selon un mode de réalisation,
- les première et deuxième parois latérales du premier couvercle contiennent deux trous traversants de montage situés de part et d'autre de l'axe de référence du premier couvercle et à distance du premier terminal ; et
- les première et deuxième parois latérales du deuxième couvercle contiennent deux trous traversants de montage situés de part et d'autre de l'axe de référence du deuxième couvercle et à distance du deuxième terminal.

Selon un mode de réalisation, la cellule possède une longueur supérieure à 250 mm, de préférence supérieure à 300 mm et/ou inférieure à 1500 mm, de préférence inférieure à 1200 mm.

Selon un autre aspect de l'invention, celle-ci a trait à un assemblage d'une pluralité de cellules de batterie telles que décrites ci-avant, l'assemblage étant remarquable en ce que les cellules sont accolées successivement deux à deux suivant un axe d'assemblage, de sorte que pour chaque paire de cellules adjacentes de la pluralité de cellules, un premier terminal de l'une des cellules de la paire de cellules adjacentes est en contact avec un deuxième terminal de l'autre des cellules de la paire de cellules adjacentes.

L'assemblage obtenu ne nécessite pas d'éléments additionnels d'interconnexion pour relier électriquement les terminaux des cellules entre eux.

Selon un autre aspect de l'invention, l'assemblage comprend des boulons insérés dans les trous traversants de montage des couvercles pour presser l'assemblage de cellules de part et d'autre dudit assemblage de cellules suivant l'axe d'assemblage. L'utilisation de boulons permet d'assurer un bon contact électrique entre les cellules.

### BRÈVE DESCRIPTION DES FIGURES

D'autres caractéristiques et avantages de l'invention ressortiront à la lecture de la description qui suit, en référence aux figures annexées, qui illustrent :
- figure 1 : un schéma de côté d'une cellule de batterie selon un mode de réalisation de l'invention ;
- figures 2A, 2B : deux vues en perspective isométrique d'une première et d'une deuxième face d'un premier couvercle de la cellule de batterie de la figure 1 ;
- figure 3 : une vue de coupe d'une portion de la cellule de batterie de la figure 1 ;
- figures 4A, 4B : deux vues en perspective isométrique représentant des étapes de montage de la cellule de batterie de la figure 1 ;
- figures 5A, 5B, 5C : des schémas représentant un assemblage de pluralités de cellules respectivement selon un premier, un deuxième et un troisième modes de réalisation de l'invention.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

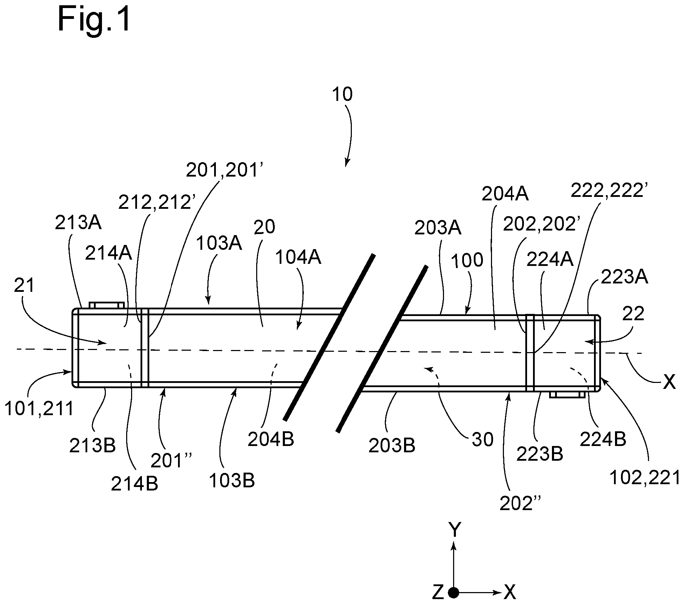

La figure 1 illustre une cellule **10** prismatique de batterie. La cellule **10** de batterie présente une forme prismatique de forme parallélépipédique rectangle. La cellule de batterie **10** comprend un boitier **100** rigide, contrairement par exemple aux cellules en forme de poche. Le boitier **100** délimite un espace intérieur **30** à l'intérieur duquel est logé un ou plusieurs empilements électrochimiques (i.e. les « stacks ») pour former la cellule **10.**

Dans ces exemples, le boitier **100** de la cellule **10** est prévu pour loger le ou les empilements électrochimiques avec un électrolyte solide (non illustré).

Le boitier **100** de la cellule **10** présente une forme prismatique de forme parallélépipédique rectangle. Le boitier **100** comprend une première **101** et une deuxième **102** parois d'extrémité, et quatre parois latérales **103A, 103B, 104A, 104B,** les quatre parois latérales s'étendant parallèlement entre elles deux à deux et parallèlement à un axe longitudinal de référence **X** du boitier **100.**

En particulier, les quatre parois latérales **103A, 103B, 104A, 104B** comprennent deux parois latérales parallèles en vis-à-vis dites « petites » parois **104A, 104B** et de deux parois latérales parallèles en vis-à-vis dites « grandes » parois **103A, 103B,** les grandes parois **103A, 103B** présentant chacune une aire supérieure à l'aire des petites parois **104A, 104B.** Les « petites » parois **104A, 104B** forment des parois supérieure et inférieure, respectivement et s'étendent horizontalement. Les « grandes » parois **103A, 103B** forment des parois latérales avant et arrière et s'étendent verticalement.

Une longueur **L** de la cellule **10** désigne sa plus grande dimension, correspondant à la distance entre les deux parois d'extrémité **101, 102.** Plus précisément, la cellule **10** possède une longueur supérieure à 250 mm, de préférence supérieure à 300 mm et/ou inférieure à 1500 mm, de préférence inférieure à 1200 mm.

Une hauteur **h** de la cellule **10** désigne la distance entre les « petites » parois **104A, 104B** du boitier **100** de la cellule **10.** Une épaisseur **e** de la cellule **10** désigne la distance entre les « grandes » parois **103A, 103B** du boitier **100** de la cellule **10.**

Les parois latérales **103A, 103B, 104A, 104B** s'étendent parallèlement à l'axe longitudinal de référence du boitier **100** depuis la première paroi d'extrémité **101** jusqu'à la deuxième paroi d'extrémité **102** opposée longitudinalement.

Les parois latérales **103A, 103B, 104A, 104B** sont adjacentes deux à deux et forment un sous-ensemble tubulaire de section rectangulaire formant un corps du boitier **100** fermé à ses deux extrémités longitudinales par les première et deuxième parois d'extrémités **101, 102.**

Dans le mode de réalisation de la figure 1, le boitier **100** comprend, et en particulier est constitué par un godet **20** fermé par deux couvercles : un premier couvercle **21** et un deuxième couvercle **22.**

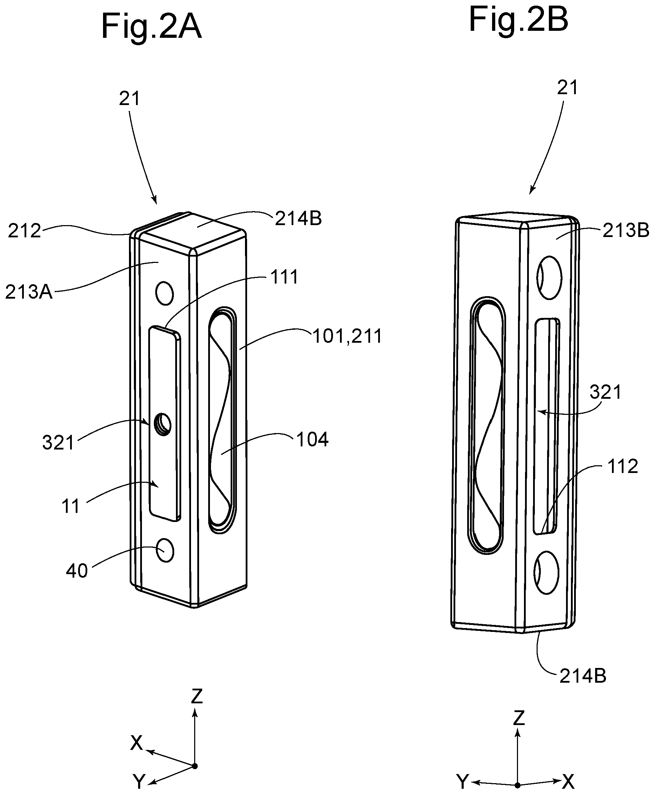

Le premier couvercle **21,** illustré sur les figures 2A et 2B, présente une forme parallélépipédique rectangle et comprend une paroi d'extrémité **211,** et quatre parois latérales **213A, 213B, 214A, 214B** s'étendant parallèlement entre elles deux à deux et parallèlement à un axe de référence **X1** du premier couvercle **21.** Les parois du premier couvercle **21** délimitent un espace intérieur ouvert **321** prévu pour accueillir un premier ensemble de connectique de la cellule **10.**

Lesdites parois latérales **213A, 213B, 214A, 214B** du premier couvercle **21** s'étendent depuis la paroi d'extrémité **211** jusqu'à une extrémité longitudinalement opposée à la paroi d'extrémité **211,** où les quatre parois latérales **213A, 213B, 214A, 214B** forment un rebord de raccordement **212** délimitant un contour fermé du premier couvercle **21.**

Les parois latérales **213A, 213B, 214A, 214B** sont adjacentes deux à deux et forment un sous-ensemble tubulaire de section rectangulaire fermé à une de ses extrémités longitudinales par la paroi d'extrémité **211** et ouverte à son extrémité longitudinale opposée par une ouverture **212'** délimitée par le rebord de raccordement **212.**

Le deuxième couvercle **22** présente une forme parallélépipédique rectangle et comprend une paroi d'extrémité **221,** et quatre parois latérales **223A, 223B, 224A, 224B** s'étendant parallèlement entre elles deux à deux et parallèlement à un axe de référence **X2** du deuxième couvercle **22.** Les parois du deuxième couvercle **22** délimitent un espace intérieur ouvert (non représenté) prévu pour accueillir un deuxième ensemble de connectique de la cellule **10.**

Lesdites parois latérales **223A, 223B, 224A, 224B** s'étendent depuis la paroi d'extrémité **221** jusqu'à une extrémité longitudinalement opposée à la paroi d'extrémité **221** où les quatre parois latérales **223A, 223B, 224A, 224B** du deuxième couvercle **22** forment un rebord de raccordement **222** délimitant un contour fermé du deuxième couvercle **22.**

Les parois latérales **223A, 223B, 224A, 224B** sont adjacentes deux à deux et forment un sous-ensemble tubulaire de section rectangulaire fermé à une de ses extrémités longitudinales par la paroi d'extrémité **221** et ouverte à son extrémité longitudinalement opposée par une ouverture **222'** délimitée par le rebord de raccordement **222.**

Le premier couvercle **21** et le deuxième couvercle **22** présentent ainsi un volume intérieur délimité par leurs parois respectives. De préférence, les premier et deuxième couvercles **21, 22** sont obtenus par divers procédés de fabrication, par exemple par extrusion et sont fabriqués au moins en partie en matériau(x) métallique(s).

Le godet **20** du boitier **100** présente une forme prismatique de forme parallélépipédique rectangle. Le godet **20** comprend quatre parois latérales **203A, 203B, 204A, 204B,** les quatre parois latérales s'étendant parallèlement entre elles deux à deux et parallèlement à l'axe longitudinal de référence **X** du boîtier **100** en position assemblée de la cellule **10.** Le godet **20** est en partie en matériau(x) métallique(s), de préférence constitué de matériau(x) métallique(s), par exemple en aluminium.

Les parois latérales **203A, 203B, 204A, 204B** s'étendent parallèlement à l'axe longitudinal de référence **X** du boitier **100** depuis une première portion d'extrémité **201"** jusqu'à une deuxième portion d'extrémité **202"** axialement opposée.

Les parois latérales **203A, 203B, 204A, 204B** sont adjacentes deux à deux et forment un sous-ensemble tubulaire de section rectangulaire ouvert à longitudinalement de part et d'autre, chaque portion d'extrémité présentant une ouverture, respectivement une première ouverture **201'** délimitée par un premier rebord de raccordement **201** associé, et une deuxième ouverture **202'** délimitée par un deuxième rebord de raccordement **202** associé. De cette manière, les parois latérales **203A, 203B, 204A, 204B** du godet **20** délimitent un espace intérieur ouvert de part et d'autre, axialement par rapport à l'axe de référence **X.**

La première ouverture **201'** et la deuxième ouverture **202'** du godet **20** s'étendent dans des plans parallèles l'un avec l'autre et orthogonaux aux parois latérales **203A, 203B, 204A, 204B.**

La première ouverture **201'** et la deuxième ouverture **202'** du godet **20** sont fermées de part et d'autre du godet **20** respectivement par le premier couvercle **21** et le deuxième couvercle **22.** Plus précisément, le boitier **100** est configuré de sorte que le premier rebord de raccordement **201** du godet **20** coopère avec le rebord de raccordement **212** complémentaire correspondant du premier couvercle **21** du boitier **100,** et le deuxième rebord de raccordement **202** du godet **20** coopère avec le rebord de raccordement **222** complémentaire correspondant du deuxième couvercle **22** du boitier **100,** ceci pour fermer le boitier **100.**

Chaque couvercle **21, 22** est fixé au godet **20** par des moyens de fixation à demeure, par exemple par soudage. Ainsi, dans une configuration possible, les premier et deuxième rebords de raccordement **201, 202** du godet **20** sont aboutés et soudés aux rebords de raccordement **212, 222** du premier **21** et du deuxième **22** couvercles pour fermer le boitier **100** de la cellule **10.**

Dans une position fermée du boitier **100** dans laquelle les couvercles **21, 22** ferment les ouvertures **201', 202'** de part et d'autre axialement du godet **20** par rapport à l'axe de référence **X** :
- chaque paroi latérale **213A, 213B, 214A, 214B** du premier couvercle **21** est positionnée dans le prolongement axial par rapport à l'axe de référence **X** de l'une des parois latérales **203A, 203B, 204A, 204B** du godet **20** d'un côté du godet **20,** depuis la première portion d'extrémité **101** ; et
- chaque paroi latérale **223A, 223B, 224A, 224B** du deuxième couvercle **22** est positionnée dans le prolongement axial par rapport à l'axe de référence **X** de l'une des parois latérales **203A, 203B, 204A, 204B** du godet **20** de l'autre côté du godet **20,** depuis la deuxième portion d'extrémité **102.**

Ainsi, le godet **20** correspond à une partie centrale du corps du boitier **100,** les couvercles **21, 22** rapportés venant fermer le corps de boitier **100** pour former ledit boitier **100** dans une position assemblée.

La première paroi d'extrémité **101** et la deuxième paroi d'extrémité **102** du boitier **100** sont constituées respectivement la paroi d'extrémité **211** du premier couvercle **21** et la paroi d'extrémité **221** du deuxième couvercle **22.**

Les quatre parois latérales **103A, 103B, 104A, 104B** du boitier **100** sont formées par la réunion des parois latérales **213A, 213B, 214A, 214B** du premier couvercle **21,** des parois latérales **203A, 203B, 204A, 204B** du godet **20,** et des parois latérales **223A, 223B, 224A, 224B** du deuxième couvercle **22.**

Les petites parois latérales **204A, 204B** du godet **20** sont ainsi coplanaires, à une première extrémité, à deux parois latérales opposées **214A, 214B** du premier couvercle **21,** et, à une autre extrémité, à deux parois latérales **224A, 224B** opposées du deuxième couvercle **22.**

Par ailleurs, la grande paroi latérale **213A** du premier couvercle **21,** la grande paroi latérale **223B** du deuxième couvercle **22** et la paroi latérale **103A** du godet **20** sont coplanaires ; et la grande paroi latérale **213B** du premier couvercle **21,** la grande paroi latérale **223A** du deuxième couvercle **22** et la paroi latérale **103B** du godet **20** sont coplanaires ; de telle sorte que les axes de références **X1, X2,** respectivement du premier et du deuxième couvercles **21, 22** sont confondus avec l'axe de référence **X** de la cellule **10.**

Conformément à l'invention, le premier couvercle **21** comprend :
- un premier orifice principal **111** formé sur une première paroi latérale du premier couvercle **21** parmi la pluralité de parois latérales **213A, 213B, 214A, 214B,** en particulier l'une grande paroi latérale **213A** du premier couvercle **21** ; et
- un premier orifice secondaire **121** formé sur une deuxième paroi latérale du premier couvercle **21** parmi la pluralité de parois latérales **213A, 213B, 214A, 214B,** en particulier l'autre grande paroi latérale **213B** du premier couvercle **21,** la deuxième paroi latérale **213B** étant parallèle à la première paroi latérale **213A** du premier couvercle **21.**

Conformément à l'invention, le deuxième couvercle **22** comprend :
- un deuxième orifice principal **112** formé sur une première paroi latérale du deuxième couvercle **21** parmi la pluralité de parois latérales **223A, 223B, 224A, 224B,** en particulier l'une grande paroi latérale **223B** du deuxième couvercle **22** ; et
- un deuxième orifice secondaire **122** formé sur une deuxième paroi latérale du deuxième couvercle **22** parmi la pluralité de parois latérales **223A, 223B, 224A, 224B,** en particulier l'autre grande paroi latérale **223A** du deuxième couvercle **22,** la deuxième paroi latérale **223A** étant parallèle à la première paroi latérale **223B** du deuxième couvercle **22.**

De préférence, le premier orifice secondaire **121** est disposé transversalement en regard du premier orifice principal **111** du couvercle **21,** et le deuxième orifice secondaire **122** est disposé transversalement en regard du deuxième orifice principal **112** du couvercle **22.** Les premier et deuxième orifices principaux **111, 112** et les premier et deuxième orifices secondaires **121, 122** sont obtenus par perçage ou découpage des parois latérales **213A, 213B, 223A, 223B** correspondantes des premier et deuxième couvercles **21, 22** associés de la cellule **10,** et présentent de préférence un contour rectangulaire.

Avantageusement, le premier orifice principal **111** et le premier orifice secondaire **121** sont centrés sur un axe de terminal **Y'** orthogonal à l'axe longitudinal de référence **X1** du premier couvercle **21 ;** le deuxième orifice principal **112** et le deuxième orifice secondaire **122** sont centrés sur un axe de terminal **Y"** orthogonal à l'axe longitudinal de référence **X2** du deuxième couvercle **22.**

Par ailleurs, le premier et le deuxième couvercles **21, 22** sont munis chacun d'un premier et d'un deuxième trous traversants de montage **40** orientés transversalement par rapport au premier couvercle **21** et situés transversalement de part et d'autre des terminaux de cellules **11, 12.**

Selon d'autres modes de réalisation, les trous traversants de montage **40** s'étendent et débouchent :
- sur la paroi d'extrémité **211** du premier couvercle **21** et sur la paroi d'extrémité **212** du deuxième couvercle **22** ;
- sur les parois latérales **214A, 214B** du premier couvercle **21** et sur les parois latérales **224A, 224B** du deuxième couvercles **21, 22.**

En outre, selon un mode de réalisation, les parois d'extrémité **101, 102** du boitier **100,** plus précisément les parois d'extrémité **211, 221** des deux couvercles **21, 22** comportent chacune un évent d'aération **104** prévu pour évacuer la chaleur produite dans l'espace intérieur **30** du boitier **100.**

Selon un autre mode de réalisation, une seule des parois d'extrémité **211,** 221 d'un des deux couvercles **21, 22** comporte un évent d'aération **104.**

La paroi latérale **213A** du premier couvercle **21** est traversée par le premier orifice principal **111** dans lequel est inséré un premier terminal de cellule **11** en position assemblée. La paroi latérale **223B** du deuxième couvercle **22** est traversée par le deuxième orifice principal **112** dans lequel est inséré un deuxième terminal de cellule **12.** Ainsi, le premier terminal **11** est orienté transversalement dans une direction opposée à celle du deuxième terminal **12.**

Les premier et deuxième terminaux **11, 12** de la cellule **10** possèdent respectivement une première surface de contact électrique **S1** et une deuxième surface de contact électrique **S2** parallèles aux parois latérales **213A, 223B** des premier et deuxième couvercles **21, 22** traversées respectivement par le premier orifice principal **111** et le deuxième orifice principal **112,** et plus généralement parallèles aux parois latérales **103A, 103B** avant et arrière correspondantes.

Les surfaces de contact **S1, S2** planes des premiers et deuxième terminaux **11, 12** sont constituées d'un matériau électriquement conducteur.

Ainsi, les premier et deuxième terminaux **11, 12** sont positionnés latéralement de part et d'autre de l'axe de référence **X** du boitier **100,** dans des orifices **111, 112** coplanaires aux grandes surfaces **103A, 103B** du godet **20** du boitier **100.** Une droite normale aux surfaces de contact **S1, S2** des premiers et deuxième terminaux **11, 12** est donc orthogonale à l'axe longitudinal de référence **X.**

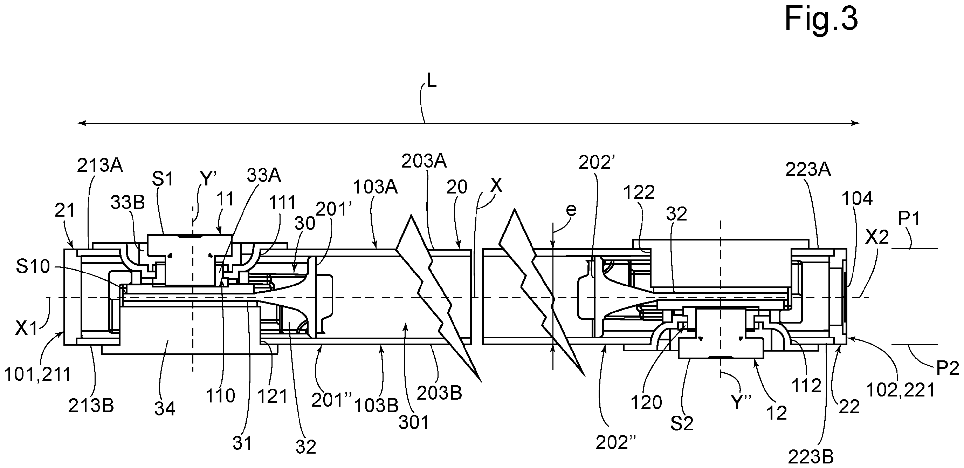

La figure 3 représente un détail d'une première interface de fixation **110** maintenant fixement en position le premier terminal de cellule **11 à** travers le premier orifice principal **111.**

La première interface de fixation **110** permet de maintenir le premier terminal de cellule **11** en position traversante du premier orifice principal **111,** la première interface de fixation **110** comprenant au moins une paire de pièces annulaires **33A, 33B** entourant le premier terminal **11** et comprenant une pièce annulaire intérieure **33A** de fixation et une pièce annulaire extérieure **33B** de fixation coopérant ensemble à travers l'orifice principal **111** et assurant une fonction de maintien du premier terminal **11** et d'étanchéité entre l'intérieur du boitier **100** et l'extérieur. Le maintien assuré par la paire de pièces annulaires **33A, 33B** est d'une part longitudinal pour permettre de maintenir centré le premier terminal **11** à travers ledit orifice principal **111,** et d'autre part, transversal en maintenant le premier terminal **11** à un même niveau. Ces moyens de maintient permettent de maintenir déportée la surface de contact **51** correspondante à une distance prédéterminée de la paroi associée du premier couvercle **21** (paroi **213A),** et plus généralement du boitier **100** (paroi **103A),** qui est constante.

Dans l'espace intérieur **30** du boitier **100** est logé au moins un empilement **301** formé de paires d'électrodes positives et d'électrodes négatives et d'un séparateur séparant chaque paire d'électrodes, le nombre d'empilements variant selon la taille du boitier **100** de la cellule **10.** De préférence, l'électrolyte utilisé est un électrolyte solide. Les électrodes d'une même polarité sont reliées à un premier collecteur de courant **31,** qui présente le plus souvent une forme de feuillard métallique permettant de relier électriquement les électrodes d'un premier pôle électrique de l'empilement **301,** par exemple de polarité positive, au premier terminal **11** de cellule.

Plus précisément, le premier collecteur de courant **31** s'étend longitudinalement dans l'espace intérieur **30** du boitier **100.** Une extrémité distale du premier collecteur de courant **31** vient se loger dans l'espace intérieur du premier couvercle **21.** Le premier collecteur de courant **31** prend la forme d'une lamelle en matériau électriquement conducteur pincée transversalement d'une part entre une butée **34** et d'autre part, le premier terminal **11** de cellule.

Dans une telle configuration, le premier collecteur de courant **31** vient au contact d'une surface intérieure **S10** électriquement conductrice, de préférence plane, du premier terminal de cellule **11,** sur laquelle il est fixé par soudure, de préférence par une soudure laser.

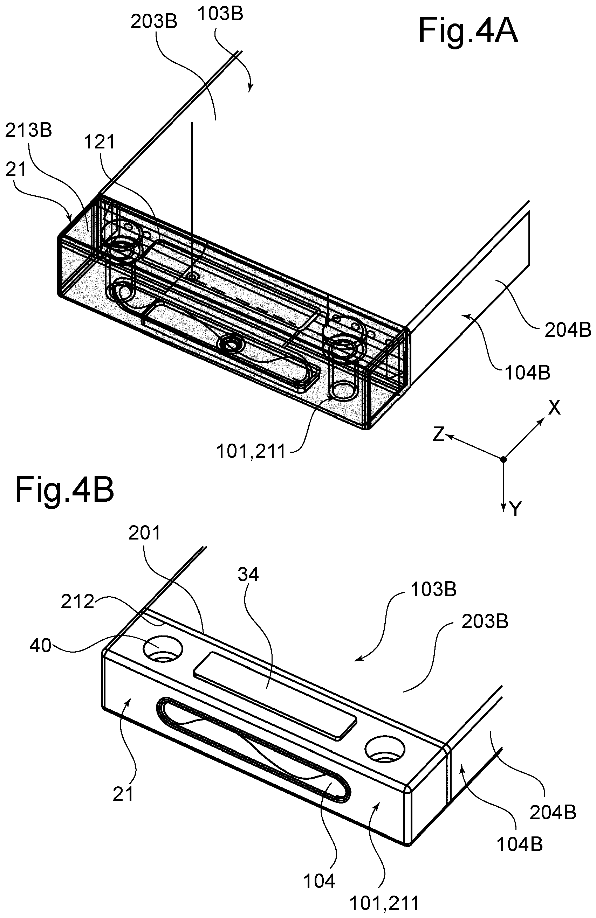

Par ailleurs, comme représenté sur les figures 3 et 4A, le premier orifice secondaire **121,** formé dans la deuxième grande paroi latérale **213B** du premier couvercle **21** permet, lors de l'assemblage de la cellule **10** de batterie, d'offrir une fenêtre d'accès à l'intérieur du boitier **100** pour procéder à des opérations de fabrication, notamment pour souder le premier collecteur de courant **31** sur la surface de contact électrique intérieure **S10** du premier terminal **11** ou encore manipuler la pièce annulaire intérieure **33A** pour faciliter sa coopération avec la pièce annulaire extérieure **33B,** ou encore pour manipuler un pied de borne **11'** du terminal **11.** Pour faciliter la soudure, du premier collecteur de courant **31** sur la surface de contact électrique intérieure **S10** du premier terminal **11,** des outils de compression peuvent être insérés depuis le premier orifice secondaire **121** pour comprimer le premier collecteur de courant **31** contre la surface de contact électrique intérieure **S10.**

La cellule **10** comprend en outre une garniture isolante **32** pour isoler électriquement à l'intérieur du boitier **100** l'ensemble de connectique depuis le premier collecteur **31** jusqu'au premier terminal **11.** La garniture isolante **32** présente ici la forme d'un film en matériau électriquement isolant pour empêcher tout faux contact ou mauvaise circulation du courant dans le premier terminal **11.**

La butée **34,** représentée sur les figures 3 et 4B, forme un bouchon de l'orifice secondaire **121** et est configurée pour fermer le premier orifice secondaire **121,** en position assemblée, et présente une extrémité distale logée à l'intérieur du boitier **100** en position assemblée configurée pour venir contre le premier collecteur de courant **31** alors pincé transversalement entre le premier terminal **11** et ladite butée **34.** Une extrémité proximale de ladite butée **34** forme une tête de la butée **34** et vient couvrir le premier orifice secondaire **121** à l'extérieur du boitier **100** et fermer ledit orifice **121.** Cette extrémité proximale est fixée à la paroi **103B** du boitier **100** associée par des moyens de fixation telle qu'une soudure. Pour améliorer l'étanchéité du boitier **100,** le corps de la butée **34** au droit du premier orifice secondaire **121** présente une section ajustée au profil dudit orifice secondaire **121.** Selon différents modes de réalisation, la butée **34** peut être fixée au premier orifice secondaire **121** par soudage, par clipsage ou par sertissage pour fermer le premier orifice **121** secondaire de façon étanche aux gaz.

De façon quasi-symétrique par rapport à l'axe longitudinal de référence **X,** la cellule **10** comporte, à une autre extrémité axiale, une deuxième interface de fixation **120** maintenant fixement en position le deuxième terminal de cellule **12** à travers le deuxième orifice principal **112.** Un deuxième collecteur de courant **32** permet de relier électriquement les électrodes d'un deuxième pôle électrique de l'empilement **301,** par exemple de polarité négative, au deuxième terminal **12** de cellule **10.**

La configuration de l'ensemble de connectique depuis le deuxième collecteur jusqu'au deuxième terminal **12** est similaire à celui associé au premier terminal **11.** En substance, ces configurations diffèrent essentiellement en ce que le deuxième terminal **12** est orienté transversalement dans une direction opposée à celle du premier terminal **11.** En effet, l'orientation est inversée puisque le deuxième orifice principal **112** traverse la paroi opposée **103B** du boitier **100,** et plus précisément la grande paroi latérale **223B** correspondante du deuxième couvercle **22.**

Le deuxième orifice secondaire **122** complémentaire du deuxième orifice principal **112** traverse la paroi opposée **223A** du deuxième couvercle **22,** coplanaire avec la paroi **103A** du boitier **100** avec la paroi traversée par le premier orifice principal **111.**

Bien entendu, les interfaces de fixation **110, 120** des terminaux **11, 12** la cellule **10** de batterie au boitier **10** ne sont pas exhaustifs et peuvent comporter des composants supplémentaires ou différents permettant d'assurer les mêmes fonctions que décrites précédemment, en particulier le maintien en position et l'isolation électrique des premier et deuxième terminaux **11, 12** de cellule. Les fonctions de maintien et d'étanchéité par les interfaces de fixation **110, 120,** en particulier ici par la paire de pièces annulaires **33A, 33B,** pourrait également être assurer par des éléments distincts. Toutefois, la configuration telle que décrite en référence aux figures permet de limiter le nombre de pièces et de simplifier la fabrication de la cellule, impactant également le coût de revient à la baisse. Il en est de même s'agissant des fonctions de bouchon et de pincement en partie de la butée **34** qui pourraient également être assurées par des éléments distincts.

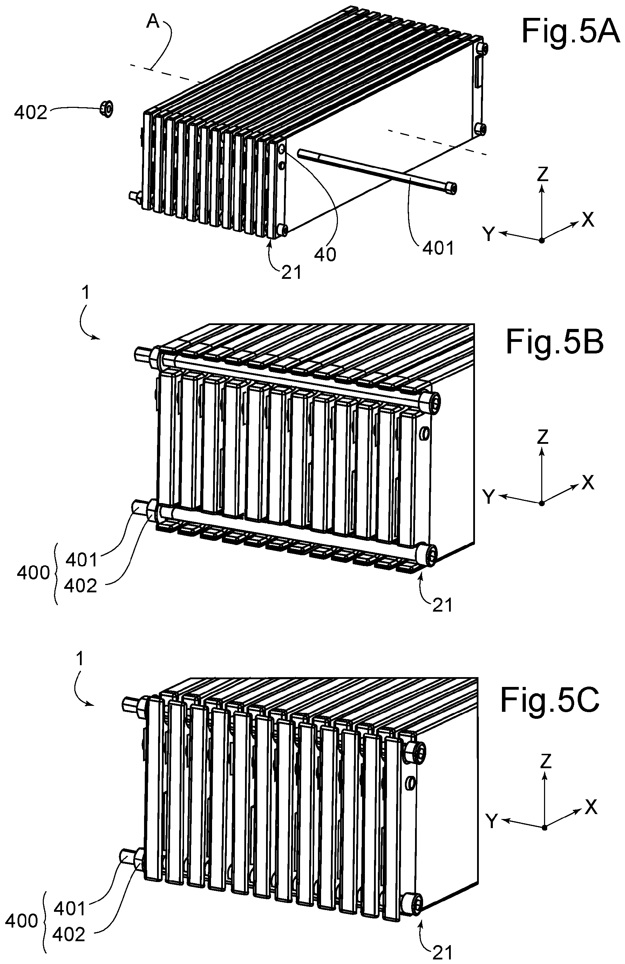

Sur les figures 5A, 5B et 5C sont représentés trois assemblages **1** possibles d'une pluralité de cellules **10** obtenues suivant le mode de réalisation décrit plus haut, les assemblages **1** différant en fonction du positionnement des trous de montage **40** sur les premier et deuxième couvercles **21, 22** des cellules **10.** Les cellules **10** sont alignées suivant un axe d'assemblage **A,** transversal aux cellules **10,** de sorte que lorsque les cellules **10** sont alignées, les trous traversants **40** sont transversalement alignés. Cet axe d'assemblage **A** est orthogonal aux axes longitudinaux des cellules **10.**

Les cellules **10** sont accolées et en vis-à-vis deux à deux suivant l'axe d'assemblage **A,** de sorte que la première surface de contact électrique **51** du premier terminal **11** de la première des deux cellules **10** vient en contact avec la deuxième surface de contact électrique **S2** du deuxième terminal **12** de la deuxième des deux cellules adjacentes.

Pour relier électriquement la pluralité de cellules **10** de l'assemblage **1,** un boulon **400** constitué d'une tige filetée à tête telle qu'une vis **401** et d'un écrou **402** taraudé complémentaire de la vis **401** est inséré dans chaque rangée de trous traversants **40** des cellules **10** pour presser la pluralité de cellules **10** de part et d'autre de l'axe d'assemblage **A.** Les boulons **400** constituent les moyens de compression **4** de l'assemblage **1.**

Chaque cellule **10** adjacente est compressée de sorte à maintenir les surfaces de contacts électriques **S1, S2** des terminaux **11, 12** en contact et en appui l'une contre l'autre. Cette connexion est localisée au niveau du seul terminal de sorte à créer un jeu au niveau de zones d'espacements entre deux cellules adjacentes à distance surfaces de contacts électriques **S1, S2** des terminaux **11, 12.** Un tel jeu peut laisser un degré de mobilité à une cellule dans l'assemblage **1.**

Pour pallier une telle contrainte, l'assemblage **1** de cellules **10** peut disposer de séparateurs ou tampons de compensation (non représentés) permettant de compenser la distance entre deux extrémités longitudinales de deux grandes parois latérales **104A, 104B** de deux cellules **10** adjacentes qui ne sont pas reliées par des terminaux de cellules **11, 12.** Plus précisément, lorsque deux terminaux **11, 12** de deux cellules adjacentes sont en contact suivant un axe transversal **Y',** un séparateur coplanaire à la surface de contact électrique des deux terminaux **11, 12** associés et centré sur l'axe transversal **Y"** peut être inséré pour compenser la distance entre les deux cellules **10.** Un tel séparateur peut ainsi être interposé entre chacune des cellules adjacentes.

Selon un mode de réalisation non représenté, l'assemblage **1** de la pluralité de cellules **10** peut être réalisé par d'autres moyens de compression **4** disposés de part et d'autre de l'axe d'assemblage **A** ou entre les terminaux **11, 12** des cellules, par exemple.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Couvercle (21) pour une cellule (10) de batterie du type comprenant un godet (20) fermé par au moins un couvercle (21), le couvercle (21) étant **caractérisé en ce qu'**il comprend :
- une paroi d'extrémité (211) ; et
- au moins deux parois latérales (213A, 213B) s'étendant parallèlement entre elles et parallèlement à un axe de référence (X1) du couvercle (21) depuis la paroi d'extrémité (211) jusqu'à un rebord de raccordement (212) présentant un contour fermé et délimitant une ouverture (212') destinée à être raccordée au godet (20) de la cellule (10),
le couvercle (21) étant **caractérisé en ce que** la paroi d'extrémité (211) et les parois latérales (213A, 213B) délimitent ensemble un espace intérieur (321), une première (213A) des deux parois latérales (213A, 213B) du couvercle (21) comprenant un orifice principal (111) traversant configuré pour accueillir un terminal (11) de cellule (10).

2. Couvercle (21) de cellule (10) de batterie selon la revendication 1, **caractérisé en ce qu'**une deuxième (213B) des deux parois latérales (213A, 213B) du couvercle (21) comprend un orifice secondaire (121) traversant complémentaire de l'orifice principal (111), l'orifice secondaire (121) étant de préférence disposé transversalement en regard de l'orifice principal (111) du couvercle (21).

3. Couvercle (21) de cellule (10) de batterie selon la revendication 1 ou 2, **caractérisé en ce que** le couvercle (21) comporte une paroi d'extrémité (211) et quatre parois latérales (213A, 213B, 214A, 214B) s'étendant parallèlement entre elles deux à deux et parallèlement à l'axe de référence (X1), les première et deuxième parois latérales (213A, 213B) du couvercle (21) étant formées par des grandes parois latérales du couvercle (21), c'est-à-dire des parois présentant chacune une aire supérieure à une aire de chacune des deux autres parois latérales (214A, 214B) du couvercle (21).

4. Couvercle (21) de cellule (10) de batterie selon l'une quelconque des revendications précédentes, **caractérisé en ce que** la paroi d'extrémité (211) est pourvue d'au moins un évent d'aération (104) fermé par une paroi amincie configurée pour former un point de faiblesse du couvercle (21) en cas d'effet de gonflement contenu à l'intérieur de la cellule (10) lorsqu'il est en position fermé de la cellule (10).

5. Cellule (10) de batterie **caractérisée en ce qu'**elle comprend un godet (20) fermé par au moins un premier couvercle (21) selon l'une quelconque des revendications 1 à 4, le godet (20) de la cellule (10) comprenant au moins deux parois latérales (203A, 203B) s'étendant parallèlement entre elles et parallèlement à un axe de référence (X) du godet (20).

6. Cellule (10) de batterie selon la revendication 5, **caractérisée en ce que** le godet (20) fermé par au moins le premier couvercle (21) délimite un espace intérieur (30) à l'intérieur duquel est logé au moins un empilement (301) d'électrodes positives et négatives, les électrodes positives étant reliées les unes aux autres à un premier terminal (11) de cellule (10) et les électrodes négatives étant reliées les unes aux autres à un deuxième terminal (12) de cellule (10), les parois latérales (203A, 203B) du godet (20) présentant à une première portion d'extrémité (201") un premier rebord de raccordement (201) présentant un contour fermé et délimitant une ouverture (201') du godet (20), le rebord de raccordement (212) du premier couvercle (21) coopérant avec le premier rebord de raccordement (201) du godet (20) pour fermer l'ouverture (201') du godet (20) de sorte que dans la position fermée du couvercle (21), au moins le premier terminal (11) est maintenu fixement à travers l'orifice principal (111) du premier couvercle (21) par une interface de fixation (110).

7. Cellule (10) de batterie selon la revendication 5 ou 6, **caractérisée en ce qu'**elle comprend un deuxième couvercle (22) comprenant :
- une deuxième paroi d'extrémité (221) ;
- au moins deux parois latérales (223A, 223B) s'étendant parallèlement à un axe de référence (X2) du deuxième couvercle (22),
- un rebord de raccordement (222) ;
définis selon l'une quelconque des revendications 1 à 4, un orifice principal (112) et un orifice secondaire (122) étant formés respectivement sur une première (223B) et une deuxième (223A) des deux parois latérales (223A, 223B) du deuxième couvercle (22), les parois latérales (203A, 203B) du godet (20) présentant à une deuxième portion d'extrémité (202") opposée axialement à la première portion d'extrémité (201") un deuxième rebord de raccordement (202) présentant un contour fermé et délimitant une deuxième ouverture (202') du godet (20), le rebord de raccordement (222) du deuxième couvercle (22) coopérant avec le deuxième rebord de raccordement (202) du godet (20) pour fermer la deuxième ouverture (202') du godet (20) de sorte que dans la position fermée du deuxième couvercle (22) au moins le deuxième terminal (12) est maintenu fixement à travers l'orifice principal (112) du deuxième couvercle (12) par une interface de fixation (120).

8. Cellule (10) de batterie selon la revendication 7, **caractérisée en ce que**, lorsque les couvercles (21, 22) ferment la cellule (10) :
- une portion de la première paroi latérale (213A) du premier couvercle (21) entourant l'orifice principal (111) du premier couvercle (21) est coplanaire à la première portion d'extrémité (201") de la première paroi latérale (203A) du godet (20) ; et
- une portion de la deuxième paroi latérale (223B) du deuxième couvercle (22) entourant l'orifice principal (112) du deuxième couvercle (22) est coplanaire à la deuxième portion d'extrémité (202") de la deuxième paroi latérale (203B) du godet (20).

9. Cellule (10) de batterie selon la revendication 7 ou 8, **caractérisée en ce que** :
- une portion de la deuxième paroi latérale (213B) du premier couvercle (21) entourant l'orifice secondaire (121) du premier couvercle (21) est coplanaire à la première portion d'extrémité (201") de la deuxième paroi latérale (203B) du godet (20) ; et
- une portion de la première paroi latérale (223A) du deuxième couvercle (22) entourant l'orifice secondaire (122) du deuxième couvercle (22) est coplanaire à la deuxième portion d'extrémité (202") de la première paroi latérale (203A) du godet (20).

10. Cellule (10) de batterie selon l'une quelconque des revendications 5 à 9, **caractérisée en ce que** le premier terminal (11) ferme de manière étanche l'orifice principal (111) du premier couvercle (21) et **en ce que** le deuxième terminal (12) ferme de manière étanche l'orifice principal (112) du deuxième couvercle (22).

11. Cellule (10) de batterie selon l'une quelconque des revendications 5 à 10, **caractérisée en ce que** le godet (20) et le (21) ou les couvercles (21, 22) sont au moins en partie en matériau(x) métallique(s).

12. Cellule (10) de batterie selon l'une quelconque des revendications 5 à 11, **caractérisée en ce que** :
- le rebord de raccordement (212) du premier couvercle (21) est soudé au premier rebord de raccordement (201) du godet (20) de la cellule (10) ; et
- le rebord de raccordement (222) du deuxième couvercle (22) est soudé au deuxième rebord de raccordement (202) du godet (20) de la cellule (10).

13. Cellule (10) de batterie selon l'une quelconque des revendications 6 à 11, **caractérisée en ce que** :
- les première et deuxième parois latérales (213A, 213B) du premier couvercle (21) contiennent deux trous traversants (40) de montage situés de part et d'autre de l'axe de référence (X1) du premier couvercle (21) et à distance du premier terminal (11) ; et
- les première et deuxième parois latérales (223A, 223B) du deuxième couvercle (22) contiennent deux trous traversants de montage (40) situés de part et d'autre de l'axe de référence (X2) du deuxième couvercle (22) et à distance du deuxième terminal (12).

14. Assemblage (1) d'une pluralité de cellules (10) de batterie décrites selon l'une quelconque des revendications 5 à 13, **caractérisé en ce que** les cellules (10) sont accolées successivement deux à deux suivant un axe d'assemblage (A), de sorte que pour chaque paire de cellules adjacentes de la pluralité de cellules (10), un premier terminal de l'une des cellules de la paire de cellules adjacentes est en contact avec un deuxième terminal de l'autre des cellules de la paire de cellules adjacentes.

15. Assemblage (1) selon la revendication précédente, **caractérisé en ce qu'**il comprend des boulons (400) insérés dans les trous traversants de montage (40) des couvercles (21, 22) pour presser l'assemblage (1) de cellules (10) de part et d'autre dudit assemblage (1) de cellules (10) suivant l'axe d'assemblage (A).
